# EUROPEAN PATENT APPLICATION

(11) **EP 2 804 042 A1**
(43) Date of publication of application: **19.11.2014**
(21) Application number: 14176481.1
(22) Date of filing: 25.05.2012
(51) Int. Cl.: G02C 3/02, A42B 1/24

(54) **Lenses and visor devices, systems, and methods**

(30) Priority: 25.05.2011 US 201161490015 P; 10.10.2011 US 201161545461 P
(62) Divisional of application: 12741401.9
(71) Applicant: Jee Investments, LLC, Paradise Valley, AZ 85253 (US)
(72) Inventor: Treger, Stefen, Paradise Valley, AZ Arizona 85253 (US); Treger, Evelyn, Paradise Valley, AZ Arizona 85253 (US); Baron, Philip, 1410 Guateng (ZA)
(74) Representative: De Anna, Pier Luigi

(57) **Abstract**

A modified cap for the attachment of eye protective lenses or modified sunglasses via retractable arms movable in several directions can provide quick placement of the sunglasses on the face. The sunglasses which do not need temples can be partially stowed under the cap's brim or in a recessed compartment in the cap's brim, either of which may have friction points or magnets set to keep the sunglasses from dropping down. The user can release the sunglasses to position them on the face where they can be held in place by the telescopic arms that extend/retract according to the required placement of the sunglasses determined by the differing head size and facial contours of the wearer. Certain embodiments, therefore, allow the fast placement and removal of sunglasses in an efficient manner by keeping them close to the user's face in a safe position when not in use.

## Description

### CROSS REFERENCE TO RELATED APPLICATIONS:

The present application is related to, claims the priority of, and incorporates by reference the entirety of U.S. Provisional Patent Applications No. 61/490,015, filed May 25, 2011, and No. 61/545,461, filed October 10, 2011.

### BACKGROUND:

### Field:

A cap, visor, or the like can be provided with movable eyewear, such as sun protective lenses. As used herein, the term "cap" can broadly refer to any cap, any hat including a full brim, any helmet, or any other type of head apparel. As used herein, a "brim" can refer to a projection of material, such as a projection of a material from the bottom of the hat's crown horizontally either in front of the face (assuming the hat is worn in a forward orientation) or all around the circumference of the hat. Sun protective lenses can include those with non-prescription lenses, prescription lenses of a combination thereof.

### Description of the Related Art:

A cap with a brim can be worn to at least partially shield a wearer's face from light. Similarly, one may wear sunglasses, while wearing or not wearing a cap with a brim, to partially shield a wearer's face from light.

Many people wear both a cap with a brim and sunglasses; however, it is not uncommon for such people to find themselves in a place where they need not wear the glasses (and they therefore remove them) and then enter an environment where they need the glasses (and they therefore place them back on). As a result, people often repeatedly transition from a need for glasses to a need to remove them. When the glasses are removed, the user needs to store them somewhere, whether they be rested upon the brim of the cap or hung from the user's shirt or pant-pocket. In any event, it is a nuisance to have to repeatedly transition from a need for glasses to a need to remove and store the glasses. As a result, those in the art have created caps including glasses that are integrated with the caps; however, there are numerous shortcomings with existing combination caps with integral glass wear. There therefore exists a need to create a combination cap with eyewear that overcomes the problems of the prior art.

### SUMMARY:

According to a disclosed embodiment of the present invention, an apparatus includes a pair of lenses having a connection between the lenses. The apparatus also includes an elongate visor member having a bottom surface. The apparatus further includes a pair of support members extending from the bottom surface of the elongate visor member to each of the pair of lenses. The support members are configured to permit the pair of lenses to move from a position approximately coplanar with the elongate visor member to a position approximately orthogonal to the elongate visor member.

In accordance with another embodiment of the present invention, an apparatus is disclosed which includes at least one lens. The apparatus also includes an elongate visor member having a bottom surface. The apparatus further includes a support member extending from the bottom surface of the elongate visor member to the at least one lens. The apparatus additionally includes a recess configured to receive the at least one lens.

In accordance with yet another embodiment of the present invention, an apparatus is disclosed which includes an elongate visor member. The elongate visor member includes a bottom surface having a recess configured to receive at least one lens. The apparatus also includes at least one site configured to permit attachment of the at least one lens to the elongate visor member.

In accordance with still another embodiment of the present invention, an apparatus is disclosed which includes a pair of lenses having a connection between the lenses. The pair of lenses is configured for coupling to a pair of provided support members configured respectively to extend from the pair of lenses and attach to a bottom surface of a provided elongate visor member.

### BRIEF DESCRIPTION OF THE DRAWINGS:

For proper understanding of the invention, reference should be made to the accompanying drawings, wherein:
Figure 1 illustrates a perspective view, according to certain embodiments, showing a cap and sunglasses positioned on a head and face respectively.
Figure 2 illustrates an underside view of a brim, according to certain embodiments, with sunglasses in a stowed position.
Figure 3 illustrates an underside view of a brim, having a recess without sunglasses, according to certain embodiments.
Figure 4 illustrates a front view of a cap with movable sunglasses in a lowered position, according to certain embodiments.
Figure 5 illustrates a side view of a cap with sunglasses in a lowered position, according to certain embodiments.
Figure 6 illustrates a side view of a movable retractable arm and stud-type attachment point, according to certain embodiments.
Figure 7 illustrates a side view of the sunglasses and retractable arm showing rotational movement allowable, according to certain embodiments.
Figure 8 illustrates sunglasses with a bendable mid-section, according to certain embodiments.
Figure 9 illustrates sunglass side attachment point options and ball joint location of the retractable arms, according to certain embodiments.
Figure 10 illustrates disassembly of the sunglasses from the cap, according to certain embodiments.
Figure 11 illustrates another retractable arm option encompassing both telescopic sections and a pivot hinge, according to certain embodiments.

### DETAILED DESCRIPTION

Certain embodiments are directed to a combined cap and sunglass product that avoids loss of or damage to the eyewear, while allowing the user to continuously wear the cap component of the product, while using the eye protection component only when desired and keeping it safe and clean when not in use.

Certain embodiments can include a modified cap, sunglasses, and a retractable arm, alone or in various combinations with one another. The sunglasses can be attached to a cap brim by moveable retractable arms and ball joints, allowing for varying the position of the sunglasses relative to the brim and for seating on the bridge of the wearer's nose. The sunglasses can be free to move in the X, Y, and Z directions to allow for different facial contours.

A recessed compartment for the sunglasses can be employed to permit the lenses to be stowed when not in use, although a recessed compartment is not required. The wearer can pull the sunglasses down towards the nose bridge from the recessed compartment in the brim. The wearer can reverse the movement to stow the sunglasses when they are not required.

The three elements of the system can be the modified sunglasses, the cap and the retractable arms. All of these elements can be disconnected to allow for the wearer to match different caps with different sunglasses based on individual style requirements. Thus, all three elements together, in various combinations, as well as each element individually can be considered an embodiment of the present invention.

The materials used for each of the three elements can differ. The cap can be made of cloth, nylon, leather, or any other suitable material. It is not necessary for the cap to be made from a single material. Moreover, the cap can include features like vents or a liner, as well as ornamental features. The brim of the cap can be made from harder material, such as board, foam, plastic or any other suitable material. The underside of the brim recess can be molded to cater to the shape of sunglasses that are to be received into the recess. The front view of the sunglasses can be similar in construction to traditional sports sunglasses. However, the sunglasses may omit side temples. Instead, they may include smaller and shorter retractable arms. The retractable arms can be made from a plastic-type material, metallic materials, such as titanium, brass or the like, or any other suitable material, such as carbon fiber. The retractable arms can extend and retract to allow for differing distance requirements from brim to nose bridge.

Certain embodiments can provide the user with the features of both a cap and sunglasses that allow for the quick placement of sunglasses on the face together with the quick removal of the same sunglasses into a safe stowed position. This design could meet the needs of the eyewear users who repeatedly puts on and takes off eye protective lenses. Such activity is commonplace in sports such as golf, baseball, marksmanship, archery, tennis, fishing, hunting, and the like.

Moreover, by omitting temples, users who wish to wear hearing protection that covers the whole ear can do so without the temples creating a gap between the hearing protection and the user's own temple.

Use of the present invention is not limited to use by sports participants. Indeed, the present invention may be used by anyone in any desired setting, including without limitation participating in a sport, spectating, relaxing by the pool or on the beach or even for those who work outside, such as landscapers, contractors, and the like. Certain embodiments can incorporate safety lenses with a hardhat, for example.

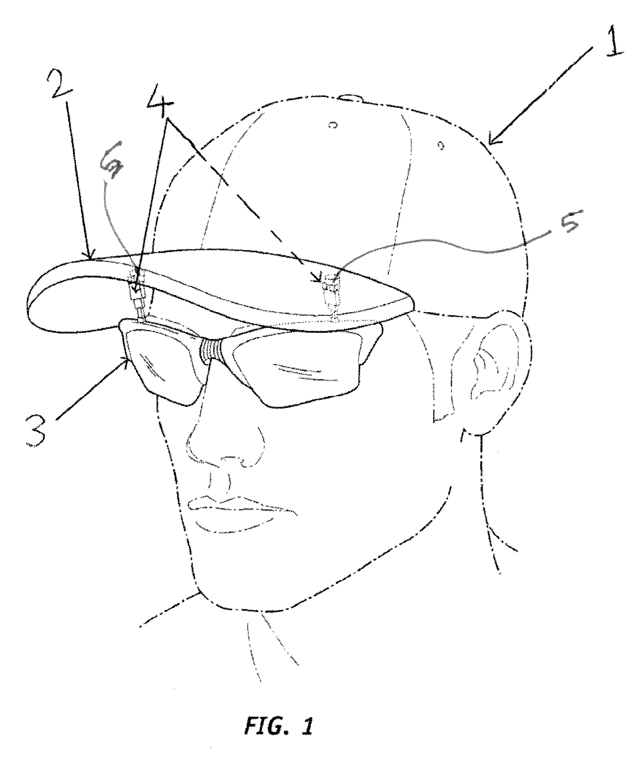

The following description describes certain embodiments of the present invention and is not intended to be limiting to the invention, as claimed, in any way. The parts and functions illustrated in Figures 1-11 and described below can be substituted for one another and can be substituted by other parts that perform the same or similar functions.

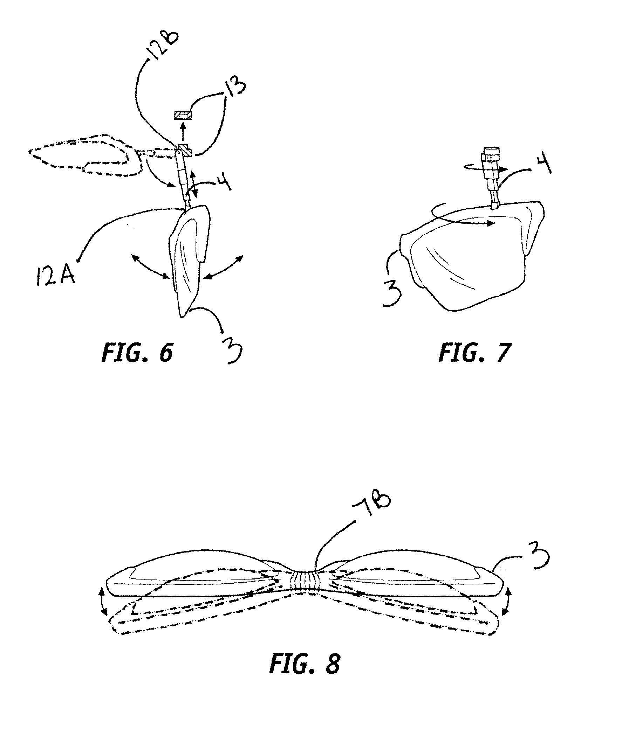

Referring to Figure 1, an embodiment of the present invention is shown and may include a modified cap 1, sunglasses 3, and a pair of retractable arms 4. The sunglasses 3, as shown in Figure 1, do not include traditional side temples (or side temple arms) that rest upon and/or wrap around the user's ears. Rather, the protective lenses or sunglasses 3 can be held to the cap 1 with retractable arms 4 that attach to the brim 2 and the sunglasses 3 at the attachment points 5, as shown in Figures 1, 4 and 5. The sunglasses 3 can be bent according to the brim 2 curvature (assuming the brim 2 has a curvature) by the flexible nose bridge of the sunglasses, as shown in Figure 8.

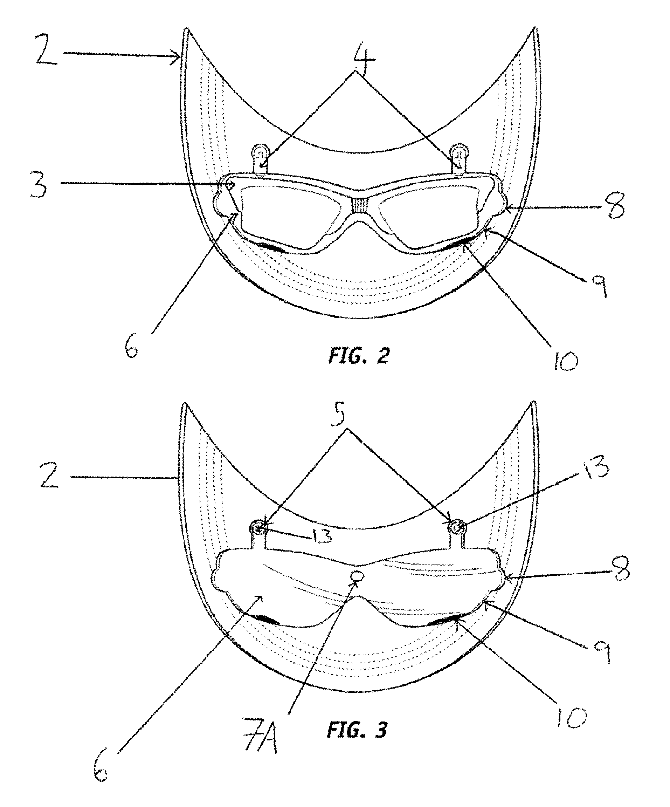

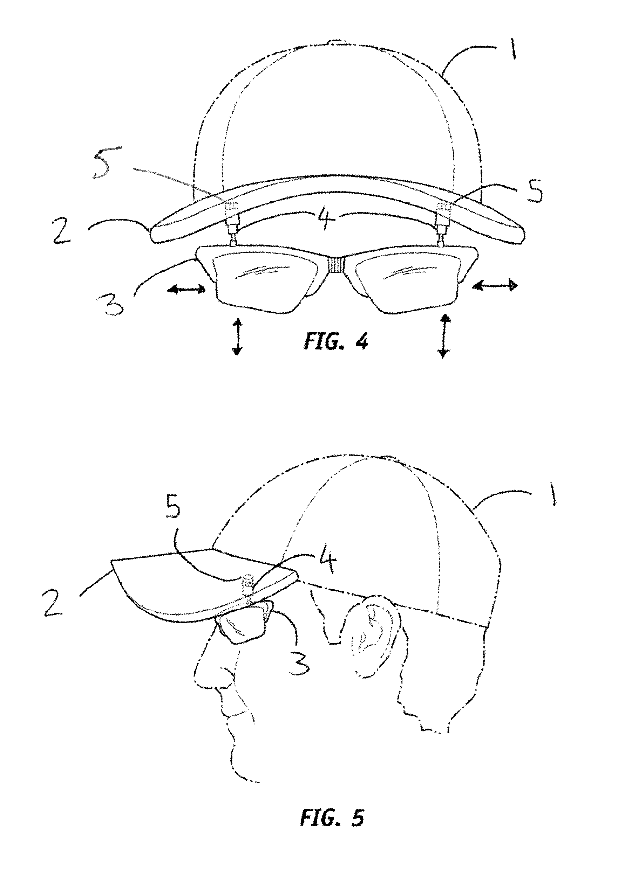

The sunglasses 3 can be positioned in at least two positions. A first position is when the sunglasses 3 are stored in the recessed compartment 6, as shown in Figure 2. A second position is when sunglasses 3 are released from the stored position to be extended to the optimal comfort point position on the bridge of the user's nose, held in place by the retractable arms 4, as shown in Figures 1 and 5. The bridge of the user's nose is one example of a comfort position. Other comfort positions are also possible. For example, in certain embodiments, a gap between the nose and the glasses may be desired or the glasses may be placed in contact with a portion of the user's forehead or the tip of the nose. These positions and any other desired positions are also permitted. In general, placement of the sunglasses on the bridge of the nose, as shown in Figure 1, is an example of the deployed position, also referred to as a position 2.

Position 1 is illustrated in Figure 2, which shows the sunglasses 3 stored in a recessed compartment 6. In the illustrated position, sunglasses 3 are stored in the recessed compartment 6 of the brim 2. The flexibility of the sunglasses 3, as shown and described with reference to Figure 8, can permit the sunglasses 3 to conform to the curvature of the brim 2, whether the brim's orientation be flat or curved. A brim 2 of a cap 1 may have any one or more of several varying degrees of curvature from flat at 180 degrees to an arc or a parabolic shape, depending on the style of the cap 1 or whether the wearer bends or shapes the brim 2. The recessed compartment 6 may be constructed by creating a cut-out in the underside of the brim 2. To that end, if desired, the thickness of the brim 2 may be the same or thicker or thinner than a typical brim thickness. The recessed compartment 6 may be created in the shape, size and depth required to allow the sunglasses 3 to lie flush (or essentially flush) with the balance of the underside of the brim 2, resulting in the sunglasses 3 being either partially hidden or completely hidden, depending on the depth of the recess 6 and the style requirements of the sunglasses 3.

The cut-out may be constructed in various ways including but not limited to a foam or a plastic molding process. The top of the brim 2 may look no different from a regular cap's brim 2, as can be seen in Figure 1 and Figure 5. The material used to line the recessed compartment 6 may be similar to that which would typically be found in a protective glasses case, but is not restricted to such material. The recessed compartment 6 may have a finger space 8 to assist in the releasing and pulling down of the sunglasses 3 from the recessed compartment 6, as shown in Figures 2 and 3.

The recessed compartment 6 may have a shape that allows the sunglasses 3 to fit into the recessed compartment 6 so as to prevent the sunglasses 3 from dropping downwards owing to gravity or movement of the wearer's head. This may be accomplished, for example, by making the shape of the recessed compartment 6 fit around the sunglasses 3 with friction points 9, as shown in Figures 2 and 3. The friction points 9 can be places around the recessed compartment 6 that are located to be slightly inside of the perimeter of the frame of the sunglasses 3, or of the lenses of the sunglasses 3 in the case of frameless lenses, so as to provide pressure on the sunglasses 3, so they do not fall downward when placed in the recessed compartment 6. The friction points 9 can be made from the same material as the cap 1 or may have treatment for additional grip (e.g., rubberizing or any other suitable gripping technique).

The friction points 9 may also be in the form of a lip 10. The lip 10 can provide upward support for the sunglasses 3. The lip 10 can be placed in a position that best suits the sunglass style and thus may be located in different positions according to different sunglass style requirements owing to differing shapes of different sunglasses. One possible position for the lip 10 is at the bottom end of the recessed compartment 6, which is the side closest to the edge of the brim 2, as shown in Figures 2 and 3.

An alternative mechanism for maintaining the sunglasses 3 in the recessed position can rely on the attractive forces of a set of magnets 7 A and 7B. At least two magnets can be used in this design. A magnet to be inserted in the brim 2 can be referred to as a brim magnet 7A, as shown in Figure 3, and one inserted in the bridge of the sunglasses 3 can be referred to as a bridge magnet 7B, as shown in Figure 8. The brim magnet 7A and the bridge magnet 7B may be aligned so as to allow the mating surfaces to be parallel when the sunglasses 3 are in the recessed position. The magnets 7A and 7B may be inserted by recessing a space for the magnet in order for it to lie flush with a surface of the brim 2 and a surface of the sunglasses 3, respectively. The brim magnet 7A may be covered with the same material as the cap 1 so as to hide the brim magnet 7A from the naked eye or finger touch. Positioning of the magnets is not restricted to the midline of the sunglasses 3 and can be located on the temple side of the sunglasses 3 or any other desired location. A neodymium magnet is one example of the kind of magnet that can be used.

The keeping of the sunglasses 3 in the upward position in the recessed compartment 6 is not restricted to using only one of the above methods, but can incorporate any combination of the above methods. For example, both a friction fit and magnets can be employed in tandem. Moreover, any other desired holding technique (e.g., hook and loop fasteners) may be employed by itself or in combination with any of the foregoing techniques.

As an alternative to having the recessed compartment 6 formed in the brim 2 of the cap 1, an attachment member (not shown) may be attached to the brim 2, the attachment member including formed therein the recessed compartment 6 or any of the foregoing related features (e.g., finger space(s) 8, friction point(s) 9, lip(s) 10 or magnets).

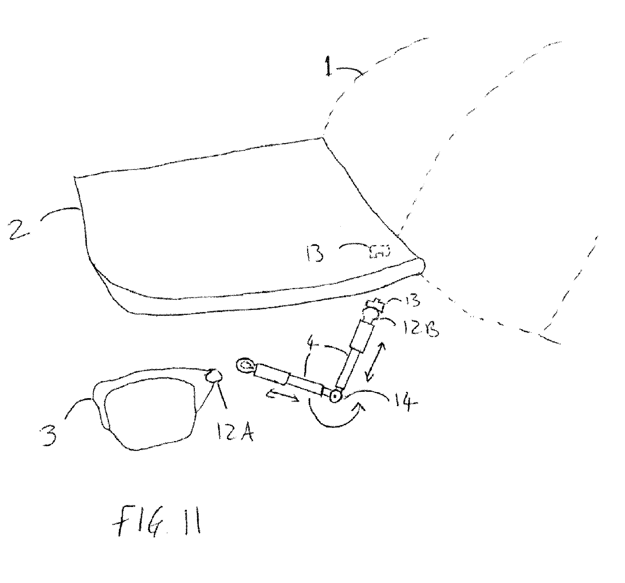

Position 2 can refer to the positioning of sunglasses 3 onto the face, as shown in Figure 5. The sunglasses 3 can be released from the recessed compartment 6 by hand to overcome holding force from the magnetic coupling or friction point(s) 9 or lip(s) 10, as shown in Figure 2. The sunglasses 3, affixed to the retractable arms 4, can have freedom to move in several directions, as shown in Figures 4, 6, 7, and 11. The retractable arms 4 can allow for varying the distance between the brim 2 and the sunglasses 3 owing to its telescopic antenna like design, as illustrated in Figures 6 and 11. This allows precise placement of the sunglasses 3 to accommodate the different facial contours of different people.

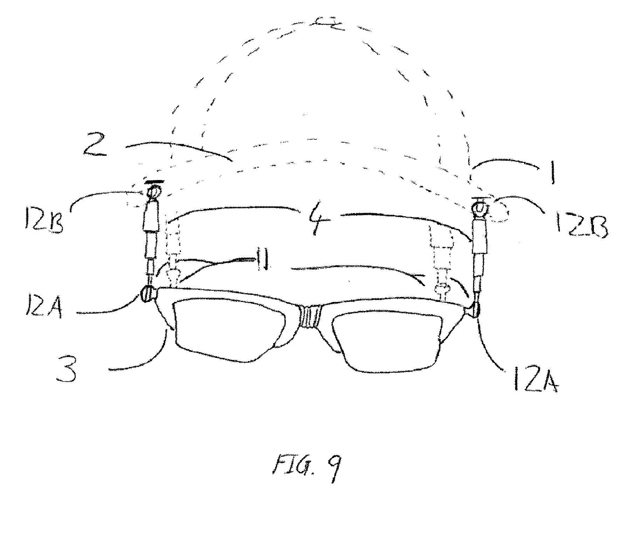

The retractable arms 4 can move forward towards the edge of the brim 2 or backward towards the forehead of the wearer. This forward and backward movement can be accommodated by using respective joints 12A and 12B (e.g., ball joints) at the affixing ends of the retractable arms 4, as shown Figure 9. In lieu of the ball joints, a hinge-type mechanism, any other desired coupling mechanism or any combination of the foregoing may be used. Thus, a ball joint on one end of an arm and a hinge on the other end of the arm are possible. Friction control can be incorporated into this design. The use of ball joints 12 on both ends of the retractable arms 4 can permit lateral movement, as shown in Figure 4. The placement of the sunglass-side attachment points 11 of the retractable arms 4, as shown in Figure 9, can depend on a variety of factors, including the style of the sunglasses 3. Sunglass attachment points 11 can be located, for example, on the outer side of the sunglasses 3, as shown in Figure 9, where the temples would normally be connected or on the top of the frame, as shown in phantom in Figure 9.

Although manual deployment of the sunglasses is described above, other embodiments can incorporate a mechanism that allows automatic movement (e.g., by an electro-mechanical driver system) from the recessed position to the extended position by the user activating an actuator to activate the driving mechanism (not shown). A spring mechanism may alternatively be implemented.

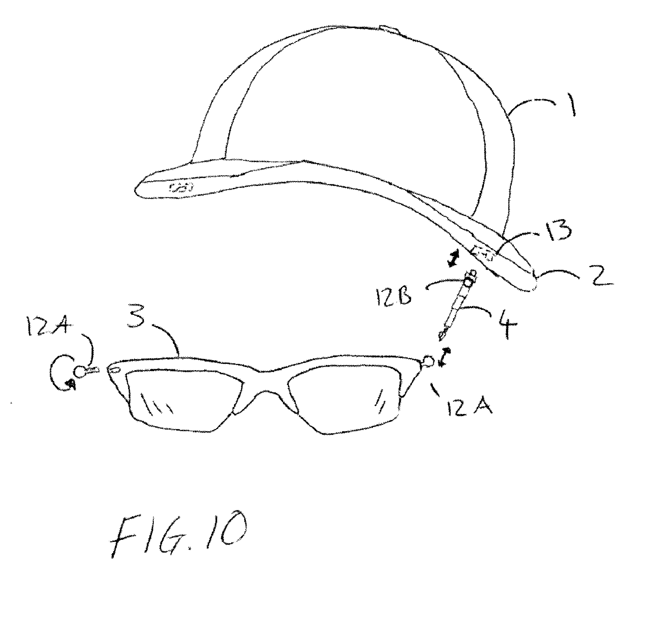

Figures 10 and 11 show the cap 1, the sunglasses 3, and the retractable attachment arms 4 separated from each other. The sunglasses 3 can be separated from the cap 1 with the use of press studs 13, magnets or any other similar fastening devices at the end of the retractable arms 4, as shown in Figures 6 and 10. The other end of the retractable arms 4 can also be removed from the sunglasses 3, thus separating from one another the sunglasses 3, the retractable arms 4 and the cap 1. Removing the retractable arms 4 from the sunglasses 3 can be undertaken by either unscrewing the ball joint 12A from the sunglasses 3, or unclipping the ball joint, as shown in Figure 10.

The ball joint can be attached to the sunglass frame via a screw. If the screw is loosened, then the ball joint can be removed from the frame. Thus, the extension arms can be removed from the frame, as they are attached to the other end of the ball joint. Further, the working side of the ball joint may have attachment to the extension arms via an encapsulated cover that encircles the round ball section of the joint. If the joint is separated (the ball separated from its casing), the extension arms can be free, as they are no longer connected to the frame. Thus, the extension arms can be removed from the sunglasses in at least two ways. First, the ball joint can be unscrewed from the frame, while the actual joint itself is kept intact. Second, the arms can be removed by opening the ball joint, by pulling off the encapsulated cover that encircles the ball of the joint. The opening of the joint can be an unclipping process.

An alternative embodiment of the retractable arm 4 is shown in Figure 11. In this option, a pivot hinge 14 is combined into the retractable arm 4 about midway along the length of the retractable arm 4. The pivot hinge 14 allows for rotation about the center of the pivot hinge 14. The pivot hinge 14 combined with the retractable arm 4 allows for further range or degrees of motion.

Thus, certain embodiments provide for the use of telescopic-type retractable arms 4, attached either permanently or in a releasable fashion to the brim 2 of a cap 1. Moreover, certain embodiments provide for the use of a press stud or any other suitable fastening technique to attach the retractable arms 4 to the brim 2 of a cap 1. Likewise, certain embodiments provide for the use of a pivoting and retractable arm system.

Certain embodiments also provide for a recessed compartment in or on the brim 2 to house the lenses either partially or completely. Certain embodiments also provide for the use of pressure pad(s) and/or extruding lip(s) or the like to maintain the sunglasses 3 in the recessed position. Thus, certain embodiments also provide for the non-use of side arms or temples.

Certain embodiments include a flexible nose piece. Moreover, certain embodiments provide a magnet system or the like to hold the sunglasses to the brim 2 when the sunglasses 3 are not in use. Likewise, certain embodiments provide for press stud or other attachment, permitting removal of the retractable arms 4 from the cap 1.

According to certain embodiments, an apparatus consistent with such embodiments can include one lens or a pair of lenses, the pair of lenses (when a pair of lenses is used) having a connection between the lenses. The lenses can be sun-protective lenses, light enhancement lenses, night vision lenses, eye-protection lenses, such as shatter-proof lenses, prescription lenses, or three-dimensional lenses, such as polarized or colorized lenses. Any other type of lens can also be used. The lenses can be in the form of one continuous lens or two or more lenses that are connected. The connection between the lenses can include a bridge, a top bar, nose pads, and pad arms. It is not required that all of these features be included. For example, the connection may be a single piece of rubber, silicone or other flexible material that is configured to bridge between the lenses and sit on a user's nose.

The apparatus can also include an elongate visor member having a bottom surface. The elongate visor member can be the brim of a cap or the brim of a visor that does not include a cap portion. There is no requirement that the elongate visor member be a part of a cap, although it can be part of a cap. The elongate visor member can be in the shape of a bill of a cap. Thus, the shape of the elongate visor member can range from arc or parabolic-shaped to flat.

Embodiments consistent with the present invention can also include a pair of support members extending from the bottom surface of the elongate visor member to each of the pair of lenses. The portion of the bottom surface of the elongate visor where the support members extend from can be selected to be approximately directly above an expected deployed position of the lenses. With respect to the lenses, the support members can be connected near a top corner at or near a place where a temple would otherwise be attached. Alternatively, the support members can be attached at a top edge of the lenses, either in the center of each lens or near a top bar or bridge for the lenses. In certain embodiments, the two support members can merge into or be replaced by a single support member located, for example, at a center of a top edge between the lenses.

The support members can be configured to permit the pair of lenses to move from a position approximately coplanar with the elongate visor member to a position approximately orthogonal to the elongate visor member. In other words, if the bottom surface of the elongate visor member is treated as a plane, even if it is parabolic or arc-shaped, then the support members can be configured to permit the pair of lenses to be positioned in approximately the same shape and in approximately the same plane as the elongate visor member. For example, the difference from the lenses being exactly co-planar with the elongate visor member may be 20 degrees or less, 10 degrees or less, or even 5 degrees or less. Likewise, the support members can be configured to permit the plane of the lenses to rotate about 90 degrees, plus or minus 20 degrees from the approximately co-planar position.

The support members can each be a telescoping member. For example, the support members each can include one hollow cylinder with a second cylinder arranged within the hollow cylinder and configured to slide in an axial direction of the hollow cylinder. Multiple cylinders arranged in a nested configuration can be used as the telescoping member. Other telescoping arrangements are also permitted.

The support members can be removably attached to the elongate visor member. For example, the support members can be attached with press studs to the elongate visor member. Alternatively, the support members can be riveted or glued to the elongate visor member. Moreover and more generally, any other attachment mechanism can be employed, whether or not such attachment mechanism is intended to permit separating the support members from the cap and/or the lenses.

The support members can be configured to align approximately in the same plane as the lenses. For example, the support members can be aligned within about 20 degrees of a plane aligned with the lenses. Thus, for example, the support members can be generally vertical, as illustrated in Figures 1 , 4, 5, 9, and 10. The support members can be configured to attach to the elongate visor member at respective movable joints. For example, the support members can be configured to attach to the elongate visor member at a ball joint, a hinge, or a universal joint. Other kinds of joints are also permitted.

The respective movable joints can be configured to stably hold a position selected by a user. For example, the joints can be configured to be resistant to the level of force that the joints experience during the motion of the user's head, but can be configured to comply when pressed more forcefully with a user's fingers. For example, the joints can be configured to hold multiple positions with a friction grip.

The support members can be configured to attach to the pair of lenses at respective movable joints. Thus, for example, the point of connection between the support members and the pair of lenses can be a hinge, a joint, such as a ball joint, or any other suitable connection.

The support members each can include an elbow joint between the elongate visor member and the pair of lenses. The elbow joint can permit rotation in one axis or in more than one axis. The support members can each include a telescoping member on each side of the respective elbow joint. Alternatively, the support members can be configured with a telescoping member only on one side of the elbow joint.

Support members can be configured to permit the lenses to rotate a predetermined amount within the degree of coplanarity, to conform with the curvature of a wearer's face or to the curvature of a brim. For example, the support members can be configured to rotate on an internal axis of the support members, as shown in Figure 7. As shown in Figure 7, the support members 4 themselves can, for example, rotate on an axis that extends in the lengthwise direction of the support member 4. This may cause the lenses 3 to rotate with the attached support member 4. As a result, the angle between the lenses 3 may change. The support members 4 can be configured to rotate independently of one another, such as in opposite directions to one another, permitting the lenses 3 to bend or flex with respect to one another, as illustrated in Figures 7 and 8.

The apparatus can also include at least one restraint configured to restrain the lenses in a position coplanar (or essentially coplanar) with the elongate visor member. For example, the restraint can be a magnet, a friction point, a lip, a button, a snap, a buckle, Velcro, or any combination of these or any other suitable technique.

The connection between the lenses can include a flexible member, as shown in Figure 8. The flexible member can be configured to be plastically deformable within a degree of coplanarity, namely within a predefined range. Thus, for example, if the flexible member is bent within a range of about 40 degrees, the flexible member can maintain the bent shape. Beyond the degree of coplanarity, such as at a deflection of 50 degrees, the flexible member can behave elastically to restore the bent shape to a deflection within the range of flexibility. A smaller range of flexibility can also be used. The connection can include an engagement member configured to contact a human nose, such as a bridge or pads. The apparatus can also include a recess in the elongate visor member. A depth of the recess can be at least equal to a thickness of the lenses and the recess can be configured to receive the lenses in a direction of the thickness. Thus, for example, the lenses can be received so as to completely or partially hide the lenses in a front view as well as a top view.

The apparatus can further include a motor configured to move the pair of lenses from the position approximately orthogonal to the elongate visor member to the position approximately coplanar with the elongate visor member. Moreover, the apparatus can additionally include a power supply configured to supply power to the motor. The power supply can be, for example, a solar panel, which can be located on the top surface of the elongate visor member. The power supply can also be or include a battery. The battery can be located within the elongate visor member.

The apparatus can also include a biasing mechanism, such as a spring, configured to bias the pair of lenses toward the position approximately orthogonal to the elongate visor member. For example, the spring can be provided to help provide a force to push the lenses gently or firmly against the wearer's face. The spring can be selected to be able to be overcome by the force of a user's hand or finger to permit the lenses to be stored within the brim of the cap.

According to another embodiment, an apparatus includes at least one lens, such as the lens or lenses described above. The apparatus in this embodiment also includes an elongate visor member having a bottom surface, like the elongate visor member described above. Moreover, the apparatus in this embodiment includes a support member, as described above, extending from the bottom surface of the elongate visor member to the at least one lens. Furthermore, the apparatus can include, in this embodiment, a recess configured to receive the at least one lens.

The recess can be in the brim of a cap itself or in a material applied to the brim of the cap. A depth of the recess can be at least equal to a thickness of the lens and/or a frame surrounding the lens and can be configured to receive the lens in a direction of the thickness, as discussed above.

An apparatus according to another embodiment can include an elongate visor member, such as described above. In this embodiment, the elongate visor member can include a bottom surface having a recess configured to receive at least one lens. The elongate visor member, in this embodiment, also includes at least one site configured to permit attachment of the at least one lens to the elongate visor member.

The recess can further include an extraction region configured to provide access to a lateral edge of the at least one lens. The extraction region can be sized to extend at least one millimeter but not more than one inch from the edge of the lens when the lens is stowed. In certain embodiments, two such extractions regions are provided: one for a right lens and one for a left lens.

An apparatus, according to another embodiment, includes a pair of lenses having a connection between the lenses, said pair of lenses configured for coupling to a pair of provided support members configured respectively to extend from the pair of lenses and attach to a bottom surface of a provided elongate visor member.

The provided support members can be configured to permit the pair of lenses to move from a position approximately coplanar with the elongate visor member to a position approximately orthogonal to the elongate visor member when attached to the elongate visor member. As noted above, "approximately" here can refer to a range of 20 degrees in either direction from planar or orthogonal, 10 degrees in either direction, or 5 degrees in either direction, as desired. For example, referring to Figure 6, the provided support members 4 can permit the pair of lenses 3 to move from a horizontal position approximately coplanar with the elongate visor member (not shown) to a vertical position approximately orthogonal to the elongate visor member when attached to the elongate visor member via attachment 13. As can be seen from Figure 6, the final position of the lenses is not precisely 90 degrees from the original position, but it is within 20 degrees of that, namely between 90 degrees and 1 10 degrees from the original horizontal position.

The apparatus can further include a tab extending in a lateral direction from a lateral edge of the lenses. This tab can be sized to be manipulated by a human finger. For example, the tab may extend from one centimeter to one inch. The tab can be made from an opaque, translucent, or transparent material. Although the support members have been described in terms of telescoping members, other kinds of extendable members are also permitted. For example, members that extend using similar principles to blinds, a jack, a screw, or a retractable tape measure are also permitted.

Methods may also be provided according to certain embodiments of the present invention. For example, a method can include manipulating a pair of lenses from a first position substantially co-planar with a visor member to a second position substantially orthogonal to the visor member. The method can include increasing the lengths of the support members during the manipulating.

Other methods can include methods of assembling or manufacturing the three functional elements and the various embodiments described above. For example, a method can include forming a recess in a brim or visor and supplying at least one attachment point for connecting a support member for lenses to the brim or visor. The method can include forming the recess so that the recess is capable of concealing the lenses from a front and a top view. The method can additionally include attaching the support members to the brim or visor and attaching the lenses to the support members. The steps of the method do not have to be performed in this order. For example, the lenses can be attached to the support members and the support members and lenses can then be attached to the brim or visor. The forming of the recess may be omitted. Moreover, the support members can be formed including telescope members.

One having ordinary skill in the art will readily understand that the invention, as discussed above, may be practiced with steps in a different order and/or with hardware elements in configurations which are different than those which are disclosed. Therefore, although the invention has been described based upon the disclosed embodiments, it would be apparent to those of skill in the art that certain modifications, variations, and alternative constructions would be apparent, while remaining within the spirit and scope of the invention. For example, while the figures illustrate a pair of support members, in certain embodiments, one of the support members may be omitted. In order to determine the metes and bounds of the invention, therefore, reference should be made to the appended claims.

## Claims

1. An apparatus, comprising:
at least one lens;
an elongate visor member (2) having a bottom surface;
a recess (6) in the bottom surface of the elongate visor member (2);
a support member (4) extending from the bottom surface of the elongate visor member (2) to the at least one lens; and
wherein the recess (6) is configured to receive the at least one lens;
wherein the support member (4) comprises a telescoping member (4).

2. The apparatus of claim 1, wherein a depth of the recess (6) is at least equal to a thickness of the lens and wherein the recess (6) is configured to receive the lens in a direction of the thickness.

3. The apparatus of claim 1, further comprising at least one restraint configured to restrain the lens in a position coplanar with the elongate visor member (2).

4. The apparatus of claim 3, wherein the restraint comprises at least one of a magnet (7A), a friction point (9), a lip (10), a button, a snap, a buckle, and Velcro.

5. The apparatus of claim 1, wherein the at least one lens comprises a pair of lenses having a connection between the lenses, wherein the connection comprises a flexible member.

6. The apparatus of claim 1, wherein the support member (4) is configured to attach to a top edge of the at least one lens or a top corner of the at least one lens.

7. The apparatus of claim 1, wherein the support member (4) is configured to permit the at least one lens to move from a position approximately coplanar with the elongate visor member (2) to a position approximately orthogonal to the elongate visor member (2).

8. The apparatus of claim 1, wherein the elongate visor member (2) comprises a brim of a cap.

9. The apparatus of claim 1, wherein the recess (6) further comprises an extraction region configured to provide access to a lateral edge of the at least one lens.

10. The apparatus of claim 1, further comprising a motor configured to move the at least one lens from a position approximately orthogonal to the elongate visor member (2) to a position approximately coplanar with the elongate visor member (2).

11. The apparatus of claim 1, further comprising a biasing mechanism configured to bias the lens toward a position approximately orthogonal to the elongate visor member (2).
